Europäisches Patentamt

European Patent Office

Office européen des brevets

(19)

(11) **EP 0 677 371 B1**

(12) **FASCICULE DE BREVET EUROPEEN**

(45) Date de publication et mention
de la délivrance du brevet:
**02.09.1998 Bulletin 1998/36**

(51) Int. Cl.⁶: **B29C 45/52**

(21) Numéro de dépôt: **95400814.0**

(22) Date de dépôt: **11.04.1995**

(54) **Ensemble clapet pointe de vis à goupille**

Zusammenbau aus Ventil und Schneckenspitze mit Stift

Assembly of valve and screw tip with pin

(84) Etats contractants désignés:
**AT CH DE ES FR GB IT LI NL**

(30) Priorité: **13.04.1994 FR 9404488**

(43) Date de publication de la demande:
**18.10.1995 Bulletin 1995/42**

(73) Titulaire: **Viron, Alain**
**F-45390 Puiseaux (FR)**

(72) Inventeur: **Viron, Alain**
**F-45390 Puiseaux (FR)**

(74) Mandataire: **Debay, Yves**
**Cabinet Yves Debay,**
**122 Elysée 2**
**78170 La Celle Saint Cloud (FR)**

(56) Documents cités:
**EP-A- 0 212 224          DE-A- 2 617 977**
**GB-A- 1 335 824**

• **PATENT ABSTRACTS OF JAPAN vol. 11 no. 94**
**(M-574) [2541] ,25 Mars 1987 & JP-A-61 246031**
**(JAPAN STEEL WORKS)**
• **PATENT ABSTRACTS OF JAPAN vol. 10 no. 281**
**(M-520) [2337] ,25 Septembre 1986 & JP-A-61**
**100427 (JIYUKEN KOGYO)**

**Description**

La présente invention concerne un ensemble clapet pointe de vis à goupille destiné notamment aux pièces d'équipement de presses à injecter des matières plastiques. GB-A-1 335 824 et EP-A-0 212 224 décrivent des ensembles clapet pointe de vis à goupille pour presses à injection.

Le but de l'invention est de limiter l'ouverture entre la bague de pression de la presse à injecter et le clapet et de permettre le recentrage en permanence du clapet tout en réduisant l'usure sur les pièces de l'ensemble.

Ce but est atteint par le fait que l'ensemble pointe de vis à goupille, clapet d'une presse à injecter, utilisé comme obturateur de non-reflux à l'avant d'une vis piston équipant les presses à injecter est caractérisé en ce que la goupille comporte uniquement deux points d'appui à ses extrémités formés par des méplats orientés suivant l'angle $\alpha2$ correspondant à l'angle du siège du clapet.

Selon une autre particularité, la goupille est de forme cylindrique et non flottante, rendue monobloc avec la pointe de vis.

Selon une autre particularité, la goupille est flottante, auto-centrante et interchangeable.

Selon une autre particularité, la goupille n'est pas cylindrique.

Selon une autre particularité, la goupille a une forme d'ailette flottante ou non flottante.

D'autres particularités et avantages de la présente invention apparaîtront plus clairement à la lecture de la description ci-après faite en référence aux dessins annexés dans lesquels :

- la figure 1 représente en coupe l'ensemble pointe de vis, goupille et clapet dans un cylindre d'injection ;
- la figure 2 représente une vue en coupe et la figure 3 une vue de dessus de la pointe de vis goupille flottante et auto-centrante selon l'invention ;
- la figure 4 représente un détail du clapet et de la goupille auto-centrante ;
- la figure 5 représente une vue en coupe et la figure 6 une vue de dessus d'une variante de goupille monobloc avec la vis.

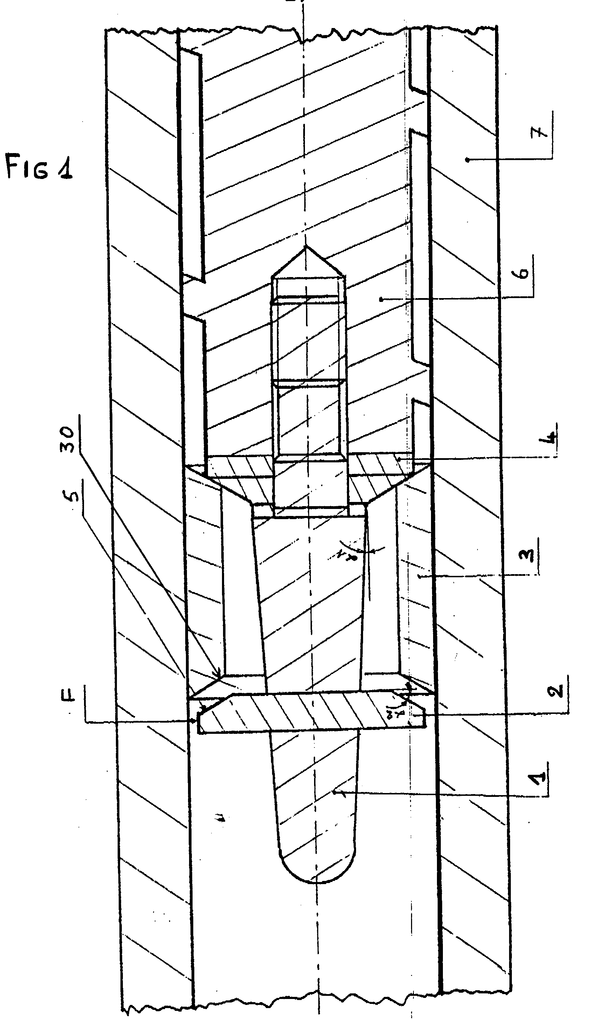

La variante auto-centrante et flottante de l'invention sera décrite en liaison avec les figures 1 à 3.

La figure 1 représente en coupe un ensemble pointe de vis (1) monté à l'extrémité d'une vis de plastification (6), l'ensemble pointe de vis (1) et vis de plastification (6) fonctionnant à l'intérieur d'un cylindre d'injection (7) d'une presse à injecter les matières plastiques.

Un clapet (3) coulisse dans le cylindre d'injection pour venir, lors des phases d'injection, appuyer sur une bague de pression (4) disposée à l'extrémité de la vis de plastification (6). La pointe de vis (1) a une conicité donnée par un angle $\alpha1$, cette conicité étant calculée de façon à sauvegarder au niveau de la goupille, lorsque celle-ci est en appui sur le siège (30) du clapet lors des phases de plastification, une surface de passage à ce niveau identique à celui disponible entre la pointe de vis et le clapet à la partie où la pointe de vis est la plus large. Ceci permet d'éviter des pertes de charge et de tenir compte de la surface occupée par la goupille.

La goupille (2) est montée sur la pointe de vis (1) à une distance (L2) de l'extrémité de la pointe de vis adjacente à la bague de pression (4), telle que lors des phases d'ouverture du clapet (3) et de décollement du clapet de la bague de pression, la goupille (2) vienne en appui sur le clapet (3) de façon à réaliser un auto-centrage avec ce clapet (3). Cet auto-centrage est obtenu par les méplats (5) usinés ou forgés selon un angle $\alpha2$ identique à l'angle formé par le siège (30) du clapet (3). Cette goupille peut être flottante par le fait qu'à température d'utilisation, elle coulisse dans le logement de forme cylindrique ou autre prévu à cet effet dans la pointe de vis. La goupille à froid pourra être montée serrée dans la pointe de vis (1) et la différence de dilatation entre les matériau assurera le flottement de celle-ci à température d'utilisation.

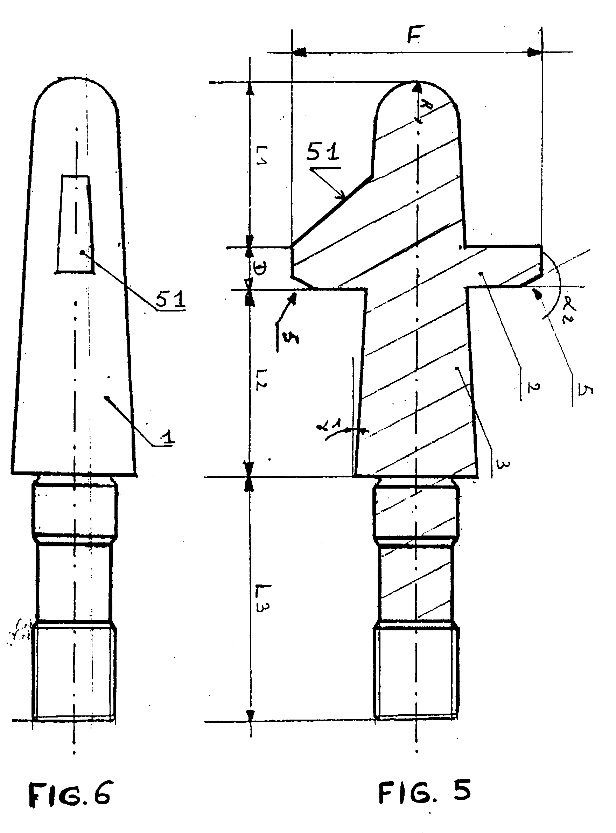

Dans une variante représentée aux figures 5 et 6, la goupille peut être, comme représentée sur la partie droite de la figure 5, cylindrique et solidaire de la pointe de vis (1) ou, comme représenté sur la partie gauche de la figure 5 et sur la figure 6, en forme d'ailette (51) et solidaire de la pointe de vis (1). Les méplats (5), usinés ou forgés selon l'angle $\alpha2$ sont nécessaires au parfait recentrage du clapet (3). Ces méplats évitent ainsi le blocage du clapet dû au fait que ce clapet (3) peut, dans le temps, prendre un jeu et avoir tendance à se disposer en travers, ce qui se traduit par un patinage de la vis de plastification (6), entraînant des irrégularités du temps de dosage et un manque de précision du volume injecté.

Du fait que la goupille (2) est flottante, à température d'utilisation, elle permet son interchangeabilité de façon simple, sans outillage spécifique. Ceci offre à la pointe vis (1) à goupille (2) un atout économique important.

Les pointes de vis de l'art antérieur sont considérées comme des pièces d'usure, en particulier pour les transformateurs de matière chargés de fibre de verre et n'offrent pas d'éléments interchangeables. De plus, la goupille flottante (2) supporte de façon intéressante les mésalignements axiaux des vis (6) de plastification et permet de diminuer l'usure de la goupille. La goupille se distingue principalement par ces deux méplats (5) usinés ou forgés ou sur lesquels peuvent être rapportées des pièces d'usure, par exemple en carbure de tungstène ou autre matériau ayant des propriétés de résistance à l'usure. Ces méplats (5) sont formés suivant un angle $\alpha2$ donné qui va permettre à la fois de recentrer le clapet (3), d'éviter son blocage et également d'autocentrer la goupille (2) lorsque celle-ci est flottante.

Le clapet (3) est dans un système à pression équilibrée de chaque côté lorsque la goupille n'est pas en appui sur le clapet. Lorsque la goupille (2) vient en appui sur le clapet (3), la faible section de cette goupille et de ces méplats (5) permet de diminuer les forces axiales transmises par le clapet (3) sur les méplats (5). En effet, ces forces axiales sont proportionnelles à la pression interne de la matière et à la surface des méplats. Ces forces axiales étant faibles, la température et l'usure par friction de la goupille sera diminuée. Par ailleurs, la faible différence de pression qui s'exerce au niveau du clapet, due à la faible section des méplats, permet d'obtenir des performances incomparables au niveau des temps de réponse de fermeture du clapet (3) sur la bague de pression (4) par rapport aux systèmes antérieurs.

Les types courants de pointe de vis ayant généralement des sections en contact beaucoup plus importantes, les forces axiales sont dans ce cas plus difficiles à vaincre et les temps de réponse sont alors plus longs, générant des remontées de matière dans la vis de plastification qui entraînent des dégradations de la matière et des pertes du volume injectable se traduisant par des manques sur les objets moulés, impliquant des rebus de production. De plus, les forces axiales étant également plus importantes, la température et l'usure par friction des pièces en sera augmentée.

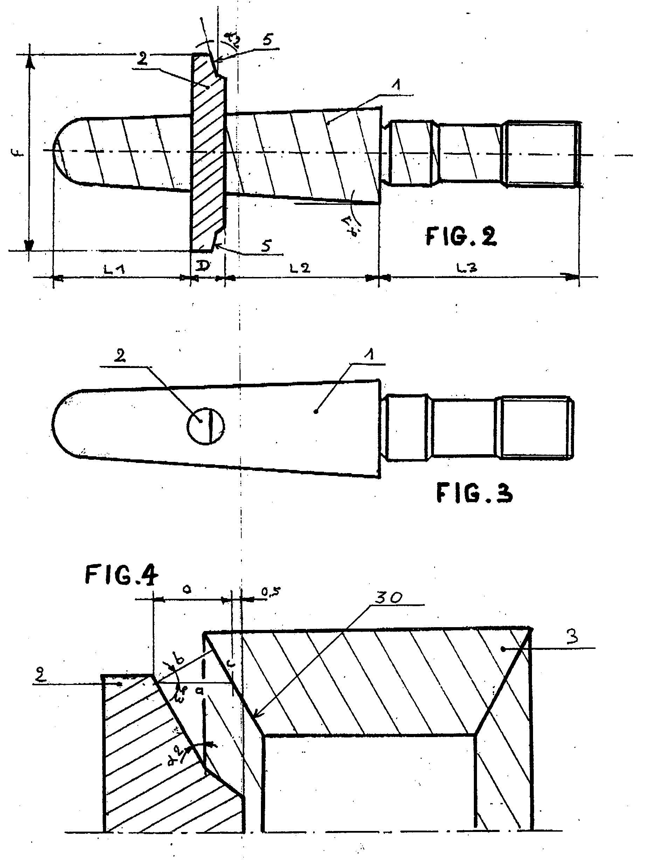

Les figures 2 et 4 représentent une variante de réalisation de la goupille et d'implantation de celle-ci dans laquelle les cotes L2 d'implantation de la goupille sur la vis (1) donnant l'écartement de la goupille par rapport au siège (30) du clapet, lorsque celui-ci est en position d'ouverture sont calculées à partir de la cote b correspondant à la distance séparant les deux surfaces parallèles constituées par le siège (30) du clapet et le méplat (5) de la goupille (2) flottante, de façon à éliminer le risque de rotation éventuel de cette goupille cylinfrique flottante (2), ce risque de rotation devant être inférieur à un quart de tour.

Une fois que la distance b a été calculée pour déterminer l'ouverture nécessaire à ne pas créer de perte de charge, l'angle α3 étant égal à l'angle α2, le calcul de α se fait ainsi :

$$\text{(tangente } \alpha 3) \times b = c$$

$$b^2 + c^2 = a^2$$

A la valeur a ainsi obtenue on ajoute par sécurité 0,5 mm et la cote L2 est ensuite déterminée en fonction de a et de la longueur du clapet (3) pour éviter que la goupille de diamètre D ne puisse tourner de plus d'un quart de tour pendant le fonctionnement de la machine.

Dans une autre variante, le blocage en rotation de la goupille (2) peut être obtenu par l'utilisation d'une goupille non cylindrique, de forme carrée, ovoïde, trapézoïdale, rectangulaire, ou par simple clavetage. Toutefois la forme cylindrique de la goupille (2) diminue les risques de cassure des matières chargées, entraînant une diminution de l'altération des caractéristiques mécaniques des objets moulés. La pointe de vis à goupille fixe ou flottante, selon l'invention, se distingue également par son extrême simplicité, peu d'éléments la constituant. De ce fait, elle garantit un débit total par rapport aux capacités des différents types de vis de plastification, ceci quelque soit la viscosité de la matière première en offrant un gain certain de productivité et en supprimant les phénomènes d'auto-échauffement de la matière transformée. L'homogénéisation de la température de la masse plastifiée augmente la précision du moulage et permet d'augmenter la production horaire.

L'interchangeabilité de la goupille (2), à la portée de l'utilisateur, lui confère un aspect économique important.

La pointe de vis selon l'invention peut être adaptée à toutes les marques de presse à injecter, ses avantages techniques la rendant performante, tant dans le domaine des pièces moulées dites 〈〈techniques〉〉que dans le domaine de 〈〈l'emballage〉〉à haute cadence horaire.

Repères géographiques :

- angle α1 de 0 à 10 degrés
- angle α2 supérieur à 1 et inférieur ou égal à 60 degrés
- (1) : pointe de vis
- (2) : goupille cylindrique ou non, flottante ou non
- (3) : clapet
- (4) : bague de pression
- (5) : méplat
- (6) : vis de plastification
- (7) : cylindre de plastification
- F : longueur de la goupille qui doit être inférieure au diamètre extérieur du clapet et supérieure au diamètre inférieur du clapet (3) et qui par ailleurs est fonction des dimensions propres de la pièce à fabriquer.

**Revendications**

1. Ensemble pointe de vis (1) à goupille (2) et clapet (3) d'une presse à injecter, utilisé comme obturateur de non-reflux à l'avant d'une vis piston (6) équipant les presses à injecter, caractérisé en ce que la goupille (2) comporte uniquement deux points d'appui à ses extrémités formés par des méplats (5) orientés suivant l'angle α2 correspondant à l'angle du siège (30) du clapet (3).

2. Ensemble pointe de vis selon la revendication 1, caractérisé en ce que la goupille (2) est de forme cylindrique et non flottante rendue monobloc avec la pointe de vis (1) .

3. Ensemble pointe de vis selon la revendication 1, caractérisé en ce que la goupille (2) est flottante, auto-centrante et interchangeable.

4. Ensemble pointe de vis selon la revendication 1, caractérisé en ce que la goupille (2) n'est pas cylindrique.

5. Ensemble pointe de vis selon la revendication 1, caractérisé en ce que la goupille (2) a une forme d'ailette (51) flottante ou non flottante.

6. Ensemble pointe de vis selon une des revendications précédentes, caractérisé en ce que la goupille est de faible section et la pointe de vis a une conicité $\alpha 1$ prévue pour éviter les pertes de charges.

**Claims**

1. Assembly comprising screw tip (1) with pin (2), and valve (3), of an injection moulding machine, used as a non-backflow shutter at the front of a reciprocating screw (6) fitted to injection moulding machines, characterized in that the pin (2) has just two bearing points at its ends and these points are formed by flats (5) directed at the angle $\alpha 2$ corresponding to the angle of the seat (30) of the valve (3).

2. Screw tip assembly according to Claim 1, characterized in that the pin (2) is of cylindrical shape and is non-floating, rendered integral with the screw tip (1).

3. Screw tip assembly according to Claim 1, characterized in that the pin (2) is floating, self-centring and interchangeable.

4. Screw tip assembly according to Claim 1, characterized in that the pin (2) is not cylindrical.

5. Screw tip assembly according to Claim 1, characterized in that the pin (2) has the shape of a floating or non-floating fin (51).

6. Screw tip assembly according to one of the preceding claims, characterized in that the pin is of small cross-section and the screw tip has a taper $\alpha 1$ designed to avoid head loss.

**Patentansprüche**

1. Baugruppe aus Schneckenspitze (1) mit Stift (2) und Ventilteil (3) für eine Spritzgußmaschine, die als Rückflußverhinderer am Vorderteil einer Schubschnecke (6) verwendet wird, mit der die Spritzgußmaschinen ausgerüstet sind, dadurch gekennzeichnet, daß der Stift (2) an seinen Enden nur zwei Anlagepunkte aufweist, die durch Abflachungen (5) gebildet sind, die nach einem Winkel $\alpha 2$ orientiert sind, der dem Winkel des Sitzes (30) des Ventilteils (3) entspricht.

2. Baugruppe aus Schneckenspitze nach Anspruch 1, dadurch gekennzeichnet, daß der Stift (2) zylindrisch und nichtschwimmend sowie in einem Block mit der Schneckenspitze (1) gebildet ist.

3. Baugruppe aus Schneckenspitze nach Anspruch 1, dadurch gekennzeichnet, daß der Stift (2) schwimmend, selbstzentrierend und austauschbar ist.

4. Baugruppe aus Schneckenspitze nach Anspruch 1, dadurch gekennzeichnet, daß der Stift (2) nicht zylindrisch ist.

5. Baugruppe aus Schneckenspitze nach Anspruch 1, dadurch gekennzeichnet, daß der Stift (2) die Form eines schwimmenden oder nichtschwimmenden Flügels (51) hat.

6. Baugruppe aus Schneckenspitze nach einem der vorhergehenden Ansprüche, dadurch gekennzeichnet, daß der Stift einen geringen Querschnitt und die Schneckenspitze eine Konizität $\alpha 1$ hat, die zur Vermeidung von Druckverlusten vorgesehen ist.

FIG 1

FIG.2

FIG.3

FIG.4

FIG. 6

FIG. 5